# EUROPEAN PATENT APPLICATION

(11) **EP 1 454 957 A1**
(43) Date of publication of application: **08.09.2004**
(21) Application number: 02788657.1
(22) Date of filing: 26.11.2002
(51) Int. Cl.: C08L 67/02, B42D 15/10, C08L 77/06, C09J 167/02, C09J 177/06, G06K 19/00

(54) **THERMOPLASTIC RESIN COMPOSITION FOR IC CARDS**

(30) Priority: 30.11.2001 JP 2001365418
(71) Applicant: TOAGOSEI CO., LTD., Tokyo 105-8419 (JP)
(72) Inventor: Imahori, Makoto, c/o Toagosei Co.,Ltd., Minato-ku, Nagoya-shi, Aichi 455-0027 (JP); Takahashi, Shin, c/o Toagosei Co.,Ltd., Minato-ku, Nagoya-shi, Aichi 455-0027 (JP)
(74) Representative: Pohlmann, Eckart, Dipl.-Phys.
(86) International application number: PCT/JP2002/012315
(87) International publication number: WO 2003/046078

(57) **Abstract**

An IC card which comprises an IC substrate, a hot-melt resin layer, and a skin material and in which these three layers are tenaciously bonded to each other and are less apt to peel off. The IC card is capable of deep embossing. Problem has been solved by employing a resin composition comprising the following specific polyester and a polyamide, as a hot-melt resin:
Polyester: saturated copolyester having cyclohexanedimethanol units as polyol units,
Polyamide: copolyamide having units derived from a compound represented by the following general formula (1) as polyamine units 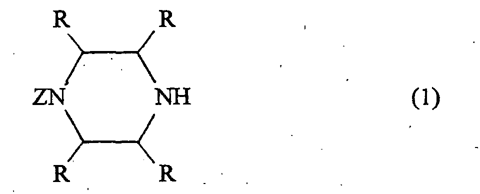
(wherein each R is a hydrogen atom or an alkyl group having 1-4 carbon atoms, provided that the four Rs may be the same or different; and Z is a hydrogen atom or an NH₂R' group, wherein R' is an alkylene group having 1-4 carbon atoms).

## Description

### Technical Field

The present invention relates to an IC card which comprises abase film to which an IC module has been fixed, a thermoplastic resin layer, and a skin material, wherein the IC module is encapsulated in the thermoplastic resin layer. In the invention, a hot-melt resin composition comprising specific components is used as the thermoplastic resin. The IC card of the invention is especially suitable for use as a non-contact type IC card, i.e., an IC card which has built-in coils for data communication and drive power supply, and performs a desired function even without being contacted with an external processor, or as a combination IC card which combines the function of a contact type card and that of a non-contact type card.

### Background Art

Recently, IC cards having a built-in IC module having a large memory capacity are utilized as bank cards, credit cards, ID cards, telephone cards, etc.

In particular, non-contact type IC cards, in which data and power are sent/received based on electric waves, and combination type IC cards, which function as both a contact type card and a non-contact type card, are coming to be used in a wider range of applications because of their convenience.

The basic structure of an IC card is a sheet-form structure comprising a film of a polyimide, poly(ethylene naphthalate), poly(ethylene terephthalate), or the like, an IC module fixed to the film, and a resin coating with which the IC module is covered. A plastic film made of poly(vinyl chloride), a polyester, polyethylene, polypropylene, or a polycarbonate has been applied as a skin material on the resin coating if necessary. IC cards having such a structure are produced generally by the processes described below.

In one process, an IC module fixed to a base film (hereinafter, a base film to which an IC module has been fixed is referred to as an IC substrate) is placed in a UV-curable resin layer, and this UV-curable resin is cured while keeping the surface of the UV-curable resin layer covered with a skin material to produce an IC card (see, for example, JP-A-6-122297). However, this process, in which a UV-curable resin is used, has a problem that the cured resin has a glass transition temperature higher than ordinary temperature and is too rigid and, hence, embossing the resulting IC card results in cracking, etc. Furthermore, there has been a problem that the UV cure is accompanied by a volume decrease due to polymerization and this is apt to result in a residual strain, leading to card deformation, etc.

Another process comprises forming a recess in a flat plate molded from a thermoplastic resin, placing an IC module in the recess, and then adhering a skin sheet to this side of the flat plate with a pressure-sensitive adhesive. However, this process has had problems that the production steps are troublesome and that the sheet adhered is apt to peel off upon embossing.

A third process comprises encapsulating an IC substrate in a hot-melt resin layer and disposing a skin material on the front and/or back side of the resin layer (see JP-A-11-134465). There is a statement in this patent document to the effect that ethylene/vinyl acetate copolymers, polyesters, polyamides, polyolefins, thermoplastic elastomers, and the like can be used as the hot-melt resin and a preferred resin is a reactive hot-melt resin comprising any of these polymers and a urethane polymer having isocyanate groups.

According to the third process, the IC card production steps are relatively simple because a UV illuminator is unnecessary and an IC module can be incorporated into a resin layer by a relatively easy operation. However, there have been problems, for example, that adhesion between the hot-melt resin layer containing an IC module encapsulated therein and the IC substrate or skin material is insufficient, and that the operation for IC module encapsulation requires too much time. Furthermore, the IC card obtained by this process is unsuitable for deep embossing.

An object of the invention is to eliminate those problems in IC cards produced by the third process described above, i.e., IC cards comprising an IC substrate, a hot-melt resin layer, and a skin material.

### Disclosure of the Invention

Intensive investigations were made in order to overcome the problems described above. As a result, it has been found that an IC card obtained by laminating a substrate on which parts including an IC chip and a coil have been mounted, i.e., an IC substrate, to a skin material through a hot-melt resin layer can be made to have exceedingly high adhesion between the skin material and the IC substrate and to undergo neither cracking nor peeling upon embossing, by using a hot-melt resin comprising a thermoplastic resin composition which comprises a specific copolyester resin and a specific copolyamide resin. The invention has been completed based on this finding.

The invention provides a thermoplastic resin composition for IC cards which comprises a saturated copolyester resin having cyclohexanedimethanol units as polyol units and a copolyamide resin having units derived from a compound represented by the following general formula (1) as polyamine units: 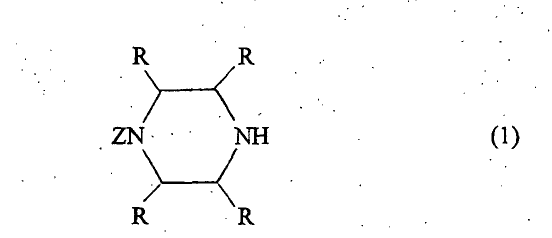 (wherein each R is a hydrogen atom or an alkyl group having 1 to 4 carbon atoms, provided that the four Rs may be the same or different; and Z is a hydrogen atom or an NH₂R' group, wherein R' is an alkylene group having 1 to 4 carbon atoms).

The invention further provides, in another aspect thereof, an IC card comprising a base film to which an IC module has been fixed (IC substrate), a thermoplastic resin layer, and a skin material, wherein the IC module is encapsulated in the thermoplastic resin layer, the IC card being characterized in that the thermoplastic resin is a thermoplastic resin composition comprising the saturated copolyester and the copolyamide resin.

The invention will be explained below in more detail.

As described above, a thermoplastic resin composition comprising a saturated copolyester resin having cyclohexanedimethanol units and a copolyamide resin having units derived from a compound represented by general formula (1) is used in the invention as an encapsulation resin for an IC substrate. The thermoplastic resin composition in the invention is a hot-melt resin composition which melts upon heating. Hereinafter, this thermoplastic resin composition will be often referred to as a hot-melt resin composition.

### Saturated Copolyester Resin:

The saturated copolyester resin serving as a component of the hot-melt resin composition of the invention is obtained by condensing one or more polycarboxylic acids with one or more polyols and has cyclohexanedimethanol units as essential polyol units. The proportion of the cyclohexanedimethanol units is preferably 20-80% by mole based on all polyol units in the saturated copolyester resin.

### (Polycarboxylic Acids)

Preferred polycarboxylic acids are aromatic dicarboxylic acids, aliphatic dicarboxylic acids, and alicyclic dicarboxylic acids each having 6-16 carbon atoms. Dialkyl esters, e.g., dimethyl esters and diethyl esters, of these carboxylic acids can be used as well as polycarboxylic acids.

Preferred examples of the aromatic dicarboxylic acids include terephthalic acid, isophthalic acid, phthalic anhydride, α-naphthalenedicarboxylic acid, and β-naphthalenedicarboxylic acid.

Preferred examples of the aliphatic dicarboxylic acids include oxalic acid, succinic acid, glutaric acid, malonic acid, adipic acid, pimelic acid, suberic acid, azelaic acid, sebacic acid, undecylenic acid, dodecanedioic acid, and dimer acids.

Preferred examples of the alicyclic dicarboxylic acids include 1,4-cyclohexanedicarboxylic acid, tetrahydrophthalic anhydride, hexahydrophthalic anhydride, and hydrogenated dimer acids.

From the standpoint of adhesion strength, preferred polycarboxylic acids among those compounds are terephthalic acid and esters thereof. The proportion of terephthalic acid units in the polyester resin is preferably 30% by mole or higher based on all polycarboxylic acid units. In case where the proportion of terephthalic acid units is lower than 30% by mole, the resin is insufficient in cohesive force and hardness, resulting in a reduced adhesion strength.

Preferred examples of other polycarboxylic acids include polycarboxylic acids having a basicity of 3 or higher, such as trimellitic acid and pyromellitic acid. One or more of these acids can be used in such an amount as not to cause gelation during polyester synthesis and not to impair adhesion strength. The proportion of units derived from one or more polycarboxylic acids having a basicity of 3 or higher is preferably up to 5% by mole based on all polycarboxylic acid units.

### (Polyols)

Preferred examples of polyols other than cyclohexanedimethanol include aliphatic glycols and alicyclic glycols each having 2-16 carbon atoms.

Preferred examples of the aliphatic glycols include ethylene glycol, 1,2-propylene glycol, 1,3-propylene glycol, 1,3-butanediol, 1,4-butanediol, 1,5-pentanediol, 1,6-hexanediol, 1,8-octanediol, 1,9-nonanediol, neopentyl glycol, 3-methylpentanediol, 2,2,3-trimethylpentanediol, diethylene glycol, triethylene glycol, and dipropylene glycol.

Preferred examples of the alicyclic glycols include hydrogenated bisphenol A.

Other preferred polyols include trihydric and higher alcohols such as glycerol, trimethylolethane, trimethylolpropane, and pentaerythritol. The proportion of units derived from one or more of these polyols is preferably up to 5% by mole based on all polyol units.

An especially preferred polyol other than cyclohexanedimethanol is ethylene glycol.

The saturated copolyester resin can be easily produced by an ordinary method. Examples of usable methods include: a melt polymerization method in which starting materials and a catalyst are introduced into a reactor and heated at a temperature not lower than the melting point of the target reaction product; a solid-phase polymerization method in which starting materials are polymerized at a temperature lower than the melting point of the target reaction product; and a solution polymerization method in which a solvent is used. Although any of these methods may be used, the melt polymerization method is preferred for obtaining a polyester suitable for the object of the invention and from the standpoint of profitability. In this method, the target polymer may be produced by transesterification or direct esterification.

### Copolyamide Resin:

The copolyamide resin which, together with the saturated copolyester resin, constitutes the hot-melt resin composition in the invention is obtained by condensing one or more polycarboxylic acids with one or more polyamines and has units derived from a compound represented by general formula (1) (hereinafter referred to as a piperazine compound) as essential polyamine units. The proportion of the piperazine compound units in the polyamide resin is preferably 20-60% by mole based on all polyamine units.

### (Polycarboxylic Acids)

Preferred polycarboxylic acids are aromatic dicarboxylic acids, aliphatic dicarboxylic acids, and alicyclic dicarboxylic acids each having 6-16 carbon atoms. Dialkyl esters, e.g., dimethyl esters and diethyl esters, of these carboxylic acids can be used as well as polycarboxylic acids.

Preferred examples of the aromatic dicarboxylic acids include terephthalic acid, isophthalic acid, phthalic anhydride, α-naphthalenedicarboxylic acid, and β-naphthalenedicarboxylic acid.

Preferred examples of the aliphatic dicarboxylic acids include oxalic acid, succinic acid, glutaric acid, malonic acid, adipic acid, pimelic acid, suberic acid, azelaic acid, sebacic acid, undecylenic acid, dodecanedioic acid, and dimer acids.

Preferred examples of the alicyclic dicarboxylic acids include 1,4-cyclohexanedicarboxylic acid, tetrahydrophthalic anhydride, hexahydrophthalic anhydride, and hydrogenated dimer acids.

More preferred polycarboxylic acids in the invention are linear aliphatic dicarboxylic acids having 6 to 16 carbon atoms. Especially preferred are adipic acid, azelaic acid, sebacic acid, and dodecanedioic acid.

### (Polyamines)

The copolyamide resin in the invention has units derived from a piperazine compound represented by general formula (1) as essential units. Preferred examples of the piperazine compound include piperazine, 2-methylpiperazine, and 1-(2-aminoethyl)piperazine.

Preferred polyamines other than such piperazine compounds are linear aliphatic diamines, alicyclic diamines, and aromatic diamines each having 2-20 carbon atoms.

Preferred examples of the aliphatic diamines include ethylenediamine, 1,3-diaminopropane, 1,4-diaminobutane, 1,6-hexamethylenediamine, decamethylenediamine, and octadecamethylenediamine.

Preferred examples of the alicyclic diamines include bis(p-aminocyclohexyl)methane, bis(p-aminocyclohexyl)propane, bis(3-methyl-4-aminocyclohexyl)methane, 1,3-bis(aminomethyl)cyclohexane, 1,4-bis(aminomethyl)cyclohexane, and isophoronediamine.

Preferred examples of the aromatic diamines include m-xylylenediamine and p-xylylenediamine.

### Hot-Melt Resin Composition:

In the hot-melt resin composition of the invention, the proportion of the saturated copolyester resin to the copolyamide resin is preferably from 90 parts/10 parts to 10 parts/90 parts by weight, more preferably from 90 parts/10 parts to 30 parts/70 parts by weight. Proportions of the copolyamide resin less than 10 parts may result in reduced adhesiveness, while proportions thereof larger than 90 parts may result in a decrease in processability such as moldability and suitability for embossing.

The saturated copolyester resin or copolyamide resin in the invention may be a polyester-polyamide copolymer formed by the polymerization of these. In this case, the kinds of preferred monomers and preferred monomer proportions are the same as shown above.

The hot-melt resin composition of the invention has adhesiveness and moldability. The composition gives a molding which preferably has a storage modulus as measured at 25°C of 5×10⁸ Pa or higher and 5×10⁹ Pa or lower. In case where the storage modulus of the molded object is outside the range, there is a possibility that the IC card might have impaired suitability for embossing.

Resins other than the polyester resin or polyamide resin described above, inorganic fillers, various stabilizers, and other ingredients can be incorporated into the hot-melt resin composition of the invention for various purposes, e.g., adhesion improvement, as long as this incorporation does not impair the performances of the invention.

Preferred examples of the resins other than the polyester resin or polyamide resin described above include epoxy resins (e.g., bisphenol A epoxy resins and cresol-novolac epoxy resins), aromatic-modified terpene resins, phenoxy resins, coumarone-indene resins, styrene resins (including styrene copolymer resins formed from styrene and one or more monomers copolymerizable with styrene), α-methylstyrene resins, rosin resins, ABS, polycarbonates, poly(ethylene terephthalate) (PET), poly(butylene terephthalate) (PBT), and poly(vinyl chloride) (PVC).

Preferred examples of the inorganic fillers include powders of calcium carbonate, zinc oxide, titanium oxide, talc, clay, and fumed silica each having an average particle diameter of 10 µm or smaller. The amount of such an inorganic filler to be incorporated is preferably up to 60 parts by weight per 100 parts by weight of all the resins in the invention.

Preferred examples of the stabilizers include hydrolysis inhibitors such as polycarbodiimides and antioxidants such as hindered phenols.

The glass transition temperature of the hot-melt resin composition, which is constituted of the ingredients described above, is preferably -40°C to 65°C. The softening point of the hot-melt resin composition is preferably 100-200°C.

It is preferred that in producing the hot-melt resin composition, the saturated copolyester resin and the copolyamide resin be melted and mixed together at a temperature not lower than the softening temperatures of these resins. Examples of mixing apparatus include a vertical stirring machine equipped with a heater, a single- or twin-screw extruder, and a kneader type heating mixer.

After the ingredients are mixed together, the resulting resin composition may be pelletized or formed into a sheet. When pellets of the hot-melt resin composition are subjected as a feed material to extrusion molding by a melting extruder having a T-die, a sheet can be formed.

### IC Substrate and Skin Material:

In the invention, the IC module on an IC substrate is encapsulated in a hot-melt resin composition layer and a skin material is further applied on the hot-melt resin composition layer. Thus, an IC card according to the invention is produced.

Preferred examples of the skin material include PET, PETG (copolyester obtained by condensation-polymerizing ethylene glycol and cyclohexanedimethanol with terephthalic acid), PVC, polycarbonates, ABS, and nylons. A sheet obtained by laminating a foil of a metal such as aluminum to a sheet made of any of these resins may also be used. The thickness of the skin material is preferably 100-150 µm.

Examples of the material of the base sheet in the IC substrate include PET, poly(ethylene naphthalate), polyimides, poly(phenylene sulfide), PVC, glass-epoxy films, and BT resin films. The thickness of the base sheet is preferably 50-100 µm.

### Process for Producing IC Card:

Typical embodiments of the IC card of the invention have a multilayer structure such as one comprising, e.g., skin material/hot-melt resin layer/IC substrate/hot-melt resin layer/skin material. However, the structure of the IC card of the invention should not be construed as being limited to that multilayer structure.

For producing an IC card, a method may be used in which a sheet of the hot-melt resin composition is sandwiched between a skin material and an IC substrate and this assemblage is hot-pressed or hot-rolled. In this method, all constituent materials may be superposed and hot-pressed en bloc, or the constituent materials may be separately subjected to hot-pressing to accomplish molding through two or more hot-pressing operations. Furthermore, constituent materials may be inserted into the nip between rolls heated with a thermal laminator to laminate the materials. It is also possible to conduct the hot-pressing only once or two or more times.

A molding temperature is preferably selected so that the hot-melt resin layer is heated to a temperature of 100-200°C. A molding time preferably is suitably selected while taking account of the materials and molding properties of the skin material and IC substrate used and the temperature of the atmosphere.

The thickness of the hot-melt resin layer is preferably regulated to from 2 µm to 1 mm (more preferably 5-600 µm) while taking account of the height of the electronic parts, including the IC, mounted on the IC substrate.

### Applications:

The IC card of the invention can be used as credit cards, bank cards, ID cards, commutation tickets, telephone cards, driving license cards, expressway tollage cards, passports, insurance cards, and the like. With respect to contact type or non-contact type, the IC card of the invention is suitable for use as non-contact type IC cards, which should have a coiled antenna therein.

### Best Mode for Carrying Out the Invention

The invention will be described below by means of Examples and Comparative Examples. Hot-melt resin compositions and IC cards were evaluated by the methods for property measurement and methods for evaluation explained below.

### Measurements of Properties of Hot-Melt Resin Compositions:

Appearance: Visual examination
Melting point: In accordance with JIS K-6810 "Testing Methods for Polyamide Resin Molding Materials", the temperature intermediate between the melting initiation temperature and melting termination temperature for a resin was measured with a heating block type micro melting-point apparatus at 2 °C/min.
Melt index: Measured in accordance with JIS K-7210 "Flow Characteristics Testing Method for Thermoplastics". The cylinder temperature in this test was 210°C and the load was 10 kgf.

### Card Performance Examination Methods:

Surface smoothness: A polyimide substrate having a thickness of 50 µm was interposed between two sheets (thickness, 100 µm) of PETG (copolyester formed from terephthalic acid, ethylene glycol, and cyclohexanedimethanol) as a skin material. A hot-melt resin formed into a 280 µm-thick sheet was sandwiched between the polyimide substrate and the upper skin material and between the polyimide substrate and the lower skin material. Namely, the constituent materials were superposed in the order of PETG/hot-melt resin/polyimide substrate/hot-melt resin/PETG. This assembly was molded by hot pressing under the conditions of a temperature of 150°C, pressure of 0.25 MPa, and molding time of 5 minutes. The resulting multilayer structure was cut into 85.5 mm × 54 mm to obtain an IC card (hereinafter referred to as a test IC card). After the card was cooled, the surface state thereof was visually examined.
Suitability for embossing: The test IC card was embossed with an embosser to impress thereon twenty characters of "8" in each of three rows. The embossed card was examined for warpage in accordance with JIS X-6305. The height of the emboss was also measured.
Peel Strength
(Method of bonding); A hot-melt resin sheet having a thickness of 280 µm was sandwiched between a polyimide film having a thickness of 25 µm and a PETG sheet having a thickness of 100 µm (EASTER 6763, manufactured by Eastman Chemical). Using a hot press, the resultant assemblage was heat-bonded together under the conditions of a temperature of 150°C, pressure of 0.25 MPa, and molding period of 5 minutes to thereby produce a test piece.
(Adhesion performance); The test piece was evaluated in accordance with JIS K-6854, Peel/Adhesion Strength Test Methods for Adhesives. The measuring temperature was 23°C and the pulling rate was 200 mm/min. Prior to the measurement, the test piece to be examined was conditioned by being allowed to stand in an atmosphere of 23°C and 50% RH for 1 day.

### EXAMPLE 1

### Synthesis of Copolyamide Resin:

0.3 mol of piperazine, 0.7 mol of ethylenediamine, and 1.0 mol of dodecanedioic acid were introduced into a four-necked flask equipped with a stirrer, nitrogen introduction tube, distillation tube, and thermometer. The mixture was refluxed for 3 hours at a temperature of 120-150°C with stirring in a nitrogen gas stream. This mixture was then gradually heated to 200°C while distilling off water over about 1 hour.

Subsequently, 6×10⁻³ mol of phosphoric acid was added thereto. The resulting mixture was heated to 220°C, and pressure reduction was initiated from 5 mmHg. The mixture was heated to 240°C over 3 hours to terminate polymerization. The final degree of vacuum was 0.05 mmHg. The resin obtained had a light-yellow appearance, a melting point of 115-125°C, and a melt index of 75 g/10 min (210°C). This resin is referred to as copolyamide resin A.

### Hot-Melt Resin Composition:

Fifty parts by weight of copolyamide resin A was blended with 50 parts by weight of polyester resin EASTER 6763 (trade name; manufactured by Eastman Chemical), which contained cyclohexanedimethanol units in an amount of 40% by mole based on all polyol units. With this blend were mixed 15 parts by weight of terpene-phenol YS Polyster T115 (manufactured by Yasuhara Chemical) as an adhesion promoter and 5 parts of titanium oxide CR50 (manufactured by Ishihara Sangyo) by means of a twin-screw extruder. The resulting extrudate was cooled with water and pelletized. A 280 µm-thick film was produced therefrom with a 150°C hot press. This film was used to produce PET-covered cards by the bonding methods described above. These cards were examined for surface smoothness, adhesion performance, and suitability for embossing. The results obtained are shown in Table 1.

### EXAMPLE 2

0.3 mol of piperazine, 0.7 mol of hexamethylenediamine, 0.5 mol of sebacic acid, and 0.5 mol of dodecanedioic acid were introduced, and copolyamide resin B was obtained in the same manner as in Example 1. The resin obtained had a light-yellow appearance, a melting point of 100-105°C, and a melt index of 50 g/10 min (210°C).

A hot-melt resin composition was prepared in the same manner as in Example 1, and evaluated. The results obtained are shown in Table 1.

### EXAMPLE 3

The same procedure as in Example 1 was conducted, except that the addition of an adhesion promoter in preparing a hot-melt resin composition was omitted. Performances were evaluated in the same manner. The results obtained are shown in Table 2.

### COMPARATIVE EXAMPLE 1

A copolyamide resin was synthesized in the same manner as in Example 1, except that hexamethylenediamine was used in place of the piperazine. As a result, copolyamide resin C was obtained. This resin had a light-yellow appearance, a melting point of 110-120°C, and a melt index of 60 g/10 min (210°C). A hot-melt resin composition was prepared and evaluated in the same manner as in Example 1. The results obtained are shown in Table 1.

### COMPARATIVE EXAMPLE 2

A hot-melt resin composition was prepared in the same manner as in Example 1, except that copolyamide resin A was not incorporated and the amount of EASTER 6763 (manufactured by Eastman Chemical) was changed to 100 parts by weight. Performances were evaluated in the same manner. The results obtained are shown in Table 1.

### COMPARATIVE EXAMPLE 3

A hot-melt resin composition was prepared in the same manner as in Example 1, except that copolyamide resin A was not incorporated and that 100 parts by weight of Aronmelt PES-111 (melting point, 125°C; MI, 50 g/10 min at 190°C), manufactured by Toagosei Chemical Industry Co., Ltd., was incorporated as the polyester resin. Performances were evaluated in the same manner. The results obtained are shown in Table 1.

### COMPARATIVE EXAMPLE 4

A hot-melt resin composition was prepared_in the same manner as in Example 1, except that the copolyester resin was not incorporated and copolyamide resin B was used. Performances were evaluated in the same manner. The results obtained are shown in Table 1.

### Industrial Applicability

The IC card of the invention is free from delamination even when an external force is applied thereto in embossing, etc., because the hot-melt resin layer is adherent at a high strength to the skin material and the IC substrate. The IC card of the invention further has excellent surface smoothness.

Furthermore, the hot-melt resin composition of the invention, which is for use in producing multilayered IC cards, can be produced by a process which is not complicated. Consequently, according to the invention, the cost of IC card production can be reduced. In particular, non-contact type IC cards, which should have a relatively complicated built-in IC module, can be easily produced according to the invention while attaining high quality.

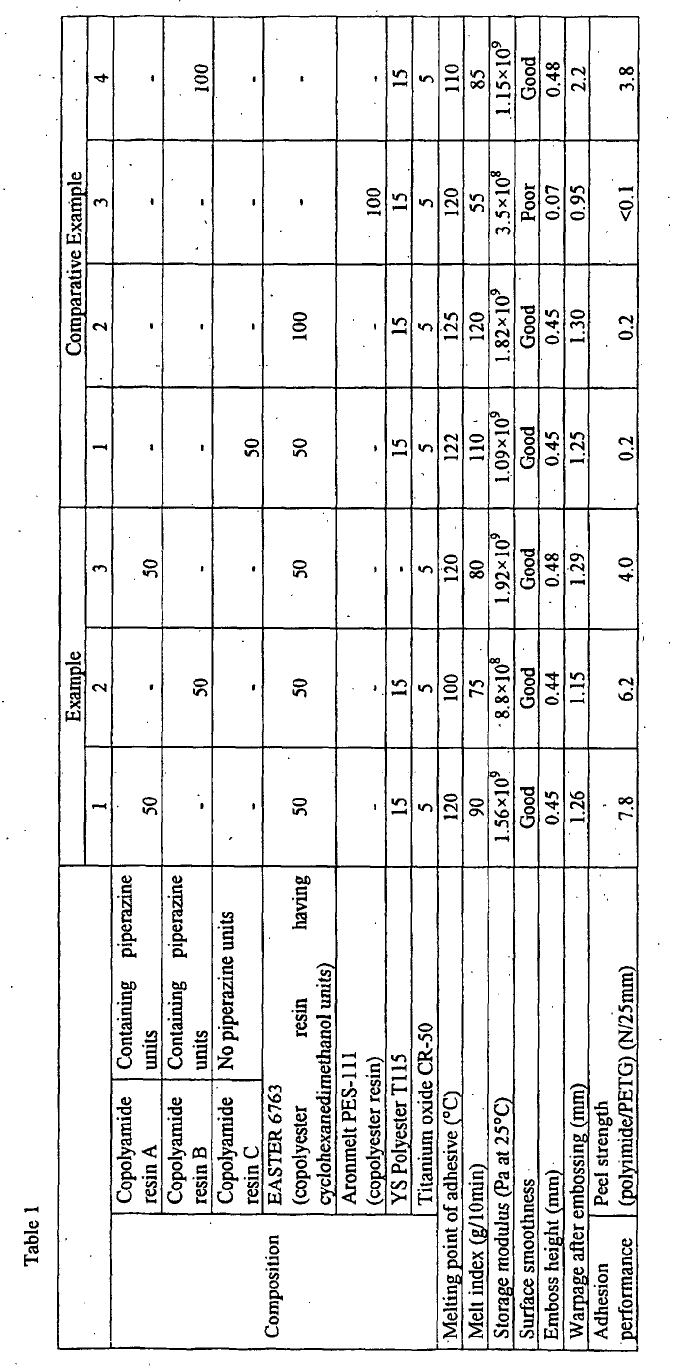

## Claims

1. A thermoplastic resin composition for IC cards which comprises a saturated copolyester resin having cyclohexanedimethanol units as polyol units and a copolyamide resin having units derived from a compound represented by the following general formula (1) as polyamine units: 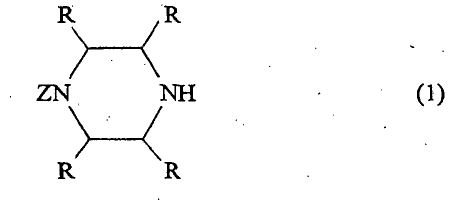 (wherein each R is a hydrogen atom or an alkyl group having 1-4 carbon atoms, provided that the four Rs may be the same or different; and Z is a hydrogen atom or an NH₂R' group, wherein R' is an alkylene group having 1-4 carbon atoms).

2. The thermoplastic resin composition for IC cards as claimed in claim 1, wherein the proportion of the cyclohexanedimethanol units in polyol units is 20-80% by mole and the proportion of the units derived from the compound represented by general formula (1) in polyamine units is 20-60% by mole.

3. The thermoplastic resin composition for IC cards as claimed in claim 1 or 2, wherein a storage modulus at 25°C of a molded object is 5×10⁸ Pa or higher.

4. An IC card comprising a base film to which an IC module has been fixed, a thermoplastic resin layer, and a skin material, the IC module been encapsulated in the thermoplastic resin layer, wherein the thermoplastic' resin layer comprises the thermoplastic resin composition as claimed in claim 1 or 2.
